# FASCICULE DE BREVET EUROPEEN

(11) **EP 0 650 903 B1**
(45) Date de publication et mention de la délivrance du brevet: **04.06.1997**
(21) Numéro de dépôt: 94116153.1
(22) Date de dépôt: 13.10.1994
(51) Int. Cl.: B65D 51/00

(54) **Bouchon pour la fermeture de la canalisation de remplissage d'un réservoir de carburant de véhicule automobile**
Tankverschlussdeckel für Kraftstoffeinfüllrohr eines Fahrzeuges
Fuel filler cap for vehicles

(30) Priorité: 26.10.1993 FR 9312765
(43) Date de publication de la demande: 03.05.1995
(73) Titulaire: PAUL JOURNEE S.A., F-60240 Reilly (FR)
(72) Inventeur: Lefèvre, Jean-Pierre, F-60240 Chaumont-en-Vexin (FR)
(74) Mandataire: Lemaire, Marc

(56) Documents cités:
- EP-A- 0 429 336
- DE-U- 8 136 984
- FR-A- 2 049 159
- FR-A- 2 436 684
- FR-A- 2 585 335

## Description

La présente invention concerne un bouchon pour la fermeture de canalisation de remplissage du réservoir de carburant d'un véhicule automobile.

L'invention concerne plus particulièrement un bouchon du type comportant un mécanisme de verrouillage rotatif qui coopère avec des moyens complémentaires formés sur l'extrémité libre de la canalisation et qui comporte au moins deux butées agencées axialement en vis-à-vis l'une de l'autre et entre lesquelles est reçue une portion d'un collet radial formé sur l'extrémité de la canalisation lorsque le bouchon est en position fermée (voir par exemple le document EP-A-0 429 336).

Un mode de réalisation le plus couramment utilisé pour les moyens de verrouillage est constitué par des pattes de verrouillage qui s'étendent sur un secteur angulaire limité et qui peuvent être introduites dans des encoches formées dans le collet radial de l'extrémité de la canalisation pour constituer un bouchon de fermeture dit "quart de tour".

Les conceptions connues d'un tel type de bouchon à verrouillage rotatif sont particulièrement complexes et nécessitent notamment l'assemblage de nombreux composants, tant pour la réalisation du corps du bouchon proprement dit que pour le montage d'un verrou lorsque le bouchon en est équipé.

L'invention a pour but de proposer une nouvelle conception de bouchon qui soit particulièrement simple, dont le nombre de composants soit réduit et dont les moyens d'assemblage en facilitent le montage et permettent notamment l'automatisation des différentes opérations aboutissant à la fabrication d'un bouchon de fermeture de canalisation de remplissage d'un réservoir de carburant.

Dans ce but, l'invention propose un bouchon du type mentionné précédemment, caractérisé en ce que le corps du bouchon comporte deux pièces montées par emboîtement élastique et dont chacune comporte l'une desdites deux butées axiales.

Selon d'autres caractéristiques de l'invention :
- la première pièce du corps du bouchon comporte une plaque de fermeture dont la face inférieure coopère de manière étanche avec un siège correspondant formé sur l'extrémité supérieure de la canalisation et comporte une première butée axiale formée en saillie sur la face inférieure, et dont la face inférieure comporte des moyens d'accrochage par emboîtement axial élastique avec des moyens complémentaires formés sur la seconde pièce du corps du bouchon qui est agencée sous la face inférieure de la plaque de fermeture ;
- la première pièce comporte une jupe d'accrochage qui s'étend axialement depuis la face inférieure de la plaque de fermeture et dont la surface périphérique comporte une gorge radiale dans laquelle est reçu au moins un bec d'accrochage formé sur la seconde pièce ;
- la seconde pièce du corps du bouchon comporte un fond dont la face supérieure est munie desdits moyens complémentaires d'accrochage et sur laquelle la seconde butée axiale est formée en saillie ;
- le fond de la seconde pièce comporte un noyau central de centrage qui est reçu à l'intérieur de la jupe d'accrochage de la première pièce;
- les moyens complémentaires d'accrochage sont constitués par deux becs d'accrochage diamétralement opposés qui sont reçus dans la gorge radiale de la jupe d'accrochage ;
- la seconde butée axiale est constituée par des tronçons d'un collet radial, et il est prévu des moyens d'immobilisation en rotation et d'indexation en position angulaire de la première pièce par rapport à la seconde pièce ;
- les moyens d'indexation comportent un doigt d'indexation lié en rotation à la première pièce et qui pénètre dans un logement de profil complémentaire formé dans le noyau de centrage de la seconde pièce ;
- les moyens d'immobilisation en rotation comportent un verrou dont le barillet est lié en rotation à la seconde pièce et est monté dans un corps de verrou lié en rotation à la première pièce ;
- l'organe de sortie du barillet est fixé axialement à la seconde pièce par emboîtement élastique ;
- le noyau central de la seconde pièce comporte au moins un doigt d'accrochage qui est reçu dans une gorge radiale interne formée dans l'organe de sortie du barillet du verrou ;
- le corps du verrou est constitué par une jupe qui s'étend axialement depuis la face supérieure de la plaque de fermeture ;
- le bouchon comporte un couvercle d'habillage ;
- le couvercle est fixé sur la plaque de fermeture par emboîtement élastique.

D'autres caractéristiques et avantages de l'invention apparaîtront à la lecture de la description détaillée qui va suivre pour la compréhension de laquelle on se reportera aux dessins annexés dans lesquels :

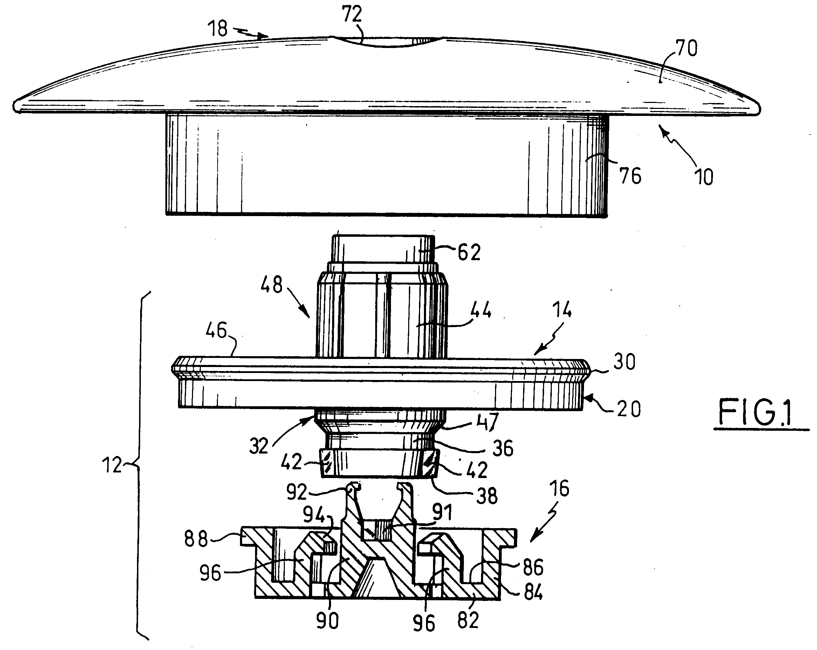

- La figure 1 est une vue éclatée des deux pièces du corps du bouchon et de son couvercle, la seconde pièce étant illustrée en section axiale ;
- la figure 2 est une vue en section axiale des trois composants illustrés sur la figure 1 en position montée du couvercle sur la première pièce et en position partiellement emboîtée sur la seconde pièce sur la première pièce du corps du bouchon ;
- la figure 3 est une vue similaire à celle de la figure 2 sur laquelle la seconde pièce est illustrée en position montée et emboîtée sur la première pièce du corps du bouchon ;
- la figure 4 est une vue en section axiale du bouchon illustré à la figure 3 qui est représenté en position montée et verrouillée sur la partie supérieure d'une canalisation de réservoir de carburant de véhicule automobile ;
- les figures 5 et 6 sont des vues en section selon les lignes 5-5 et 6-6 de la figure 3 ; et
- la figure 7 est une vue en bout, selon la flèche F de la figure 4, de la partie supérieure de l'extrémité de la canalisation.

Le bouchon 10 illustré sur les figures est constitué pour l'essentiel par un corps de bouchon 12 en deux pièces 14 et 16 et par un couvercle 18.

La première pièce 14 du corps de bouchon 12, qui est la pièce supérieure en considérant les figures, est également appelée platine, tandis que la seconde pièce inférieure 16 est appelée cuvette.

Les différents composants 14, 16 et 18 présentent une forme générale de révolution autour d'un axe vertical en considérant les figures.

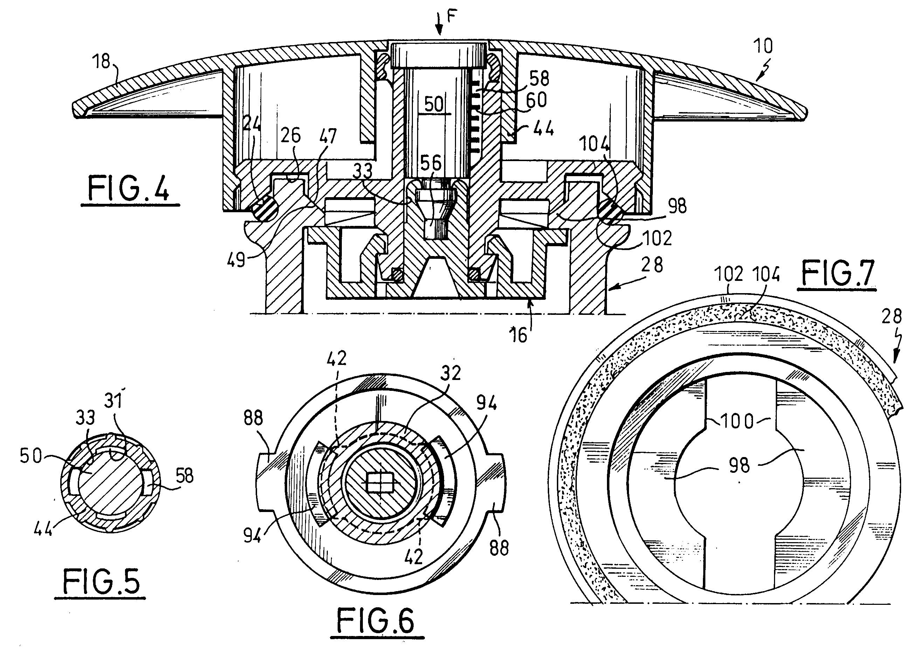

La platine 14 est pour l'essentiel constituée par une plaque de fermeture 20 dont la face inférieure 22 tournée vers la cuvette 16 comporte une portée conique d'étanchéité 24 et un dégagement annulaire 26 qui sont prévus pour coopérer avec la partie supérieure d'une tubulure ou canalisation de remplissage 28 illustrée aux figures 4 et 7, comme cela sera expliqué par la suite.

La paroi latérale cylindrique de la plaque 20 comporte une nervure radiale extérieure en saillie 30.

Dans sa partie centrale, la plaque de fermeture 20 se prolonge verticalement vers le bas par une jupe cylindrique annulaire d'accrochage 32.

La surface cylindrique externe 34 de la jupe 32 comporte une gorge radiale interne profilée 36 tandis que la face radiale d'extrémité 38 comporte un logement qui reçoit un joint torique d'étanchéité 40.

Comme on peut le voir sur la figure 6, la gorge radiale 36 est délimitée axialement vers le bas par deux tronçons en arc de cercle d'un épaulement radial externe 42.

La platine 14 comporte également une jupe supérieure annulaire cylindrique 44 qui s'étend verticalement au-dessus de la face supérieure 46 de la plaque de fermeture 20.

La jupe supérieure 44 constitue le corps fixe d'un verrou 48 dont le barillet 50 est monté à rotation dans la jupe 44.

La tige de sortie 52 du barillet 50 comporte une gorge radiale 54 et se termine par une portion d'extrémité 56 de section rectangulaire.

Comme on peut le voir sur la figure 4, la jupe 44 comporte dans son épaisseur un logement axial vertical 58 prévu pour recevoir les paillettes 60 du barillet 50 et immobiliser ainsi en rotation le barillet 50 par rapport au corps 44.

La partie supérieure du barillet 50 comporte un collet radial 62 dont la face inférieure 64 prend appui sur la face annulaire supérieure 66 de la jupe 44. Une garniture d'étanchéité en forme de bague 68 est également prévue à la partie supérieure du corps de verrou 44.

Le couvercle 18 se compose pour l'essentiel d'un voile supérieur 70 en forme de dôme qui comporte un trou central 72 donnant accès à la face supérieure du barillet 50 et qui se prolonge axialement vers l'intérieur par une jupe annulaire cylindrique interne 74 dans laquelle le corps de verrou 44 est reçu en coulissement.

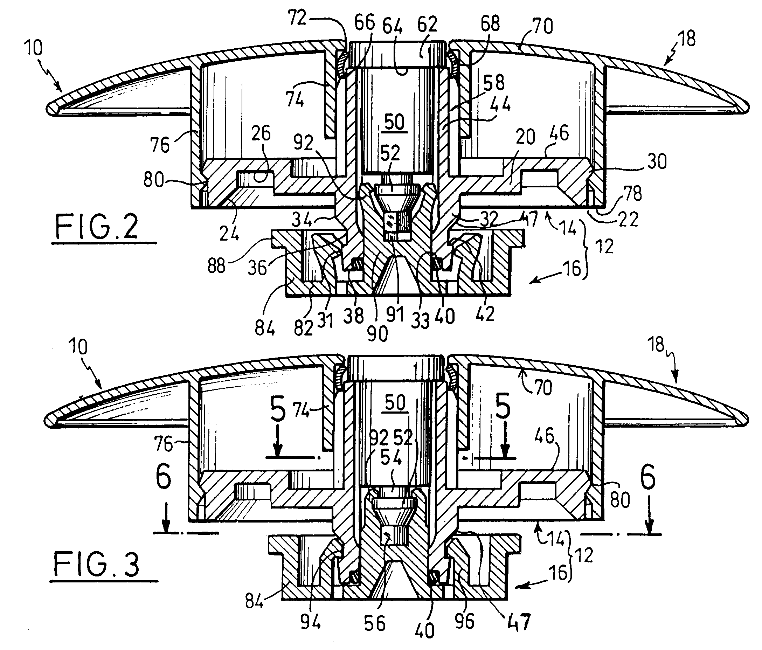

Le voile 70 comporte également une jupe annulaire cylindrique externe 76 qui comporte sur sa face interne, et au voisinage de son bord annulaire d'extrémité 78, une nervure 80 qui est prévue pour coopérer par emboîtement élastique avec la nervure 30 de la plaque de fermeture 20 de façon à assurer la liaison entre le couvercle 18 et la platine 14 lorsque les deux composants sont dans leur position montée illustrée notamment à la figure 2.

La face inférieure 22 de la plaque de fermeture 20 de la platine 14 comporte également deux prolongements axiaux qui s'étendent verticalement en saillie vers le bas 47, qui sont illustrés sur la figure 4, et dont chacun se termine axialement sous la forme d'unerampe inclinée 49, les rampes 49 constituant les premières butées axiales du corps de bouchon 12 au sens de l'invention.

La seconde pièce 16 en forme de cuvette est constituée pour l'essentiel par un fond transversal plan 82 qui se prolonge par une jupe cylindrique annulaire périphérique 84 qui s'étend axialement vers le haut depuis la face supérieure 86 du fond 82.

Le bord supérieur de la jupe 84 comporte deux portions en arc de cercle 88 d'un collet radial externe qui constituent les secondes butées axiales du corps de bouchon 12 au sens de l'invention.

La cuvette 16 comporte également en son centre un noyau central de guidage et de centrage 90 qui s'étend verticalement vers le haut depuis la face supérieure 86 et qui est prévu pour être reçu dans l'alésage cylindrique interne 33 de la jupe d'accrochage 32.

Le noyau 90 comporte un logement 92 dont la section transversale est complémentaire de la section de l'extrémité profilée rectangulaire 56 de l'organe de sortie 54 du barillet 50.

Un doigt radial interne d'accrochage 92 est formé à la partie supérieure du noyau de guidage 90 et il est prévu pour être reçu en emboîtement élastique dans la gorge 54 formée dans la tige de sortie 52 du barillet 50.

Le doigt de verrouillage 92 peut être constitué par une nervure radiale interne complète s'étendant sur double tour du noyau 90 ou par des tronçons d'une telle nervure.

Comme cela sera expliqué par la suite, et afin de permettre l'emboîtement élastique des doigts 92 dans la gorge 50, la paroi cylindrique interne 33 de la jupe d'accrochage 32 comporte deux évidements axiaux 31 diamétralement opposés.

La cuvette 16 comporte enfin deux becs d'accrochage 94 en forme de tronçons d'un collet radial externe qui sont formés aux extrémités supérieures de bras verticaux de liaison 96 qui s'étendent vers le haut depuis la face supérieure 86 du fond 82.

Le profil des becs de verrouillage 94 est prévu de manière qu'ils soient reçus dans la gorge 36 formée dans la jupe d'accrochage 32.

Conformément aux enseignements de l'invention, l'assemblage des deux pièces 14 et 16 du corps de bouchon 12 s'effectue par emboîtement élastique comme cela est illustré aux figures 2 et 3.

Dans la position d'emboîtement partiel illustrée à la figure 2, le noyau de guidage 90 a pénétré dans l'alésage 33 de la jupe d'accrochage 32, les doigts d'accrochage 92 et les becs d'accrochage 94 n'ayant pas encore pénétré dans leurs gorges respectives 54 et 36.

L'assemblage des deux composants est terminé lorsque, après avoir exercé une pression axiale tendant à rapprocher les deux composants, les doigts 92 et les becs 94 ont pénétré simultanément dans les gorges 54 et 36 comme cela est illustré sur la figure 3.

Lors de l'assemblage, l'extrémité 56 de la tige de sortie 52 du barillet 50 a également pénétré dans le logement complémentaire 91.

La seule opération d'emboîtement axial des pièces 14 et 16 provoque leur immobilisation relative en translation, ainsi que l'immobilisation axiale du barillet 50 du verrou dans le corps de verrou 44.

Le barillet 50 est lié en rotation avec la cuvette 16, cet ensemble pouvant tourner par rapport à la platine 14 si l'on introduit une clé dans le barillet 50 pour rentrer les paillettes 60 qui, en position verrouillée, s'étendent dans le logement 58 (voir figure 4).

Comme cela est illustré aux figures 4 et 7, et d'une manière connue, le bouchon 10 est prévu pour obturer de manière étanche la partie supérieure de la canalisation 28 selon la technique dite du "verrouillage quart de tour".

A cet effet, la canalisation 28 comporte un collet radial interne 98 qui comporte deux logements diamétralement opposés 100 qui sont prévus pour permettre le passage des secondes butées axiales de verrouillage 88 lorsque ces dernières sont amenées angulairement en regard des logements 100.

Dans la position verrouillée illustrée sur la figure 4, le collet radial 98 est reçu axialement entre les premières butées axiales 47 et les secondes butées axiales 88 de manière à assurer une fermeture étanche de la canalisation par l'intermédiaire de la portée conique 24 qui coopère de manière étanche avec un siège 102 de la canalisation 28 avec interposition d'une garniture d'étanchéité 104 réalisée sous la forme d'un joint torique.

Le déverrouillage du bouchon 10 pour l'ouverture de la canalisation 28 s'effectue en introduisant une clé dans le barillet 50 de manière à libérer le barillet 50 en rotation par rapport au corps 44 du verrou, cette libération permettant de provoquer une rotation de la cuvette 16 d'un quart de tour par rapport à la platine 10 et à l'extrémité supérieure de la canalisation 28 pour amener à nouveau les butées axiales 88 en regard des logements 100.

Une fois cette position angulaire atteinte (non représentée sur les figures), il est alors possible d'extraire le bouchon 10 axialement, vers le haut en considérant la figure 4.

L'invention n'est pas limitée au mode de réalisation qui vient d'être décrit.

Elle trouve notamment à s'appliquer dans le cas d'un bouchon 10 ne comportant pas de verrou, la platine 14 comportant alors dans sa partie centrale un doigt d'indexation réalisé venu de matière qui assure la même fonction d'indexation angulaire et d'immobilisation en rotation de la platine 14 par rapport à la cuvette 16.

## Revendications

1. Bouchon (10) pour la fermeture de la canalisation (28) de remplissage du réservoir de carburant d'un véhicule automobile, du type comportant un mécanisme de verrouillage rotatif qui coopère avec des moyens complémentaires (98) formés sur l'extrémité de la canalisation (28) et qui comportent au moins deux butées (88, 47) agencées axialement en vis-à-vis l'une de l'autre et entre lesquelles est reçue une portion d'un collet radial (98) formé sur l'extrémité de la canalisation (28) lorsque le bouchon est en position fermée, caractérisé en ce que le corps du bouchon comporte deux pièces (14, 16) montées par emboîtement élastique et dont chacune comporte l'une desdites deux butées axiales (47, 88).

2. Bouchon selon la revendication 1, caractérisé en ce que la première pièce (14) du corps (12) du bouchon comporte une plaque de fermeture (20) dont la face inférieure (22) coopère de manière étanche (104) avec un siège correspondant (102) formé sur l'extrémité supérieure de la canalisation (28) et dont la face inférieure comporte une première butée axiale (47) formée en saillie sur ladite face inférieure (22), et comporte des moyens (36) d'accrochage par emboîtement axial élastique avec des moyens complémentaires (92) formés sur la seconde pièce (16) du corps (12) du bouchon qui est agencée sous la face inférieure (22) de la plaque de fermeture (20).

3. Bouchon selon la revendication 2, caractérisé en ce que la première pièce (14) comporte une jupe d'accrochage (32) qui s'étend axialement depuis la face inférieure (22) de la plaque de fermeture (20) et dont la surface périphérique comporte une gorge radiale (36) dans laquelle est reçu au moins un bec (94) d'accrochage formé sur la seconde pièce (16).

4. Bouchon selon l'une des revendications 2 ou 3, caractérisé en ce que la seconde pièce (16) du corps (12) du bouchon comporte un fond (82) dont la face supérieure (86) est munie desdits moyens complémentaires d'accrochage (94) et sur laquelle la seconde butée axiale (88) est formée en saillie.

5. Bouchon selon la revendication 4 prise en combinaison avec la revendication 3, caractérisé en ce que le fond (82) de la seconde pièce (16) comporte un noyau central (90) de centrage qui est reçu à l'intérieur (33) de la jupe d'accrochage (32) de la première pièce (14).

6. Bouchon selon l'une des revendications 4 ou 5, caractérisé en ce que les moyens complémentaires d'accrochage sont constitués par deux becs d'accrochage (94) diamétralement opposés qui sont reçus dans la gorge radiale (36) de la jupe d'accrochage (32).

7. Bouchon selon l'une quelconque des revendications 4 à 6, caractérisé en ce que la seconde butée axiale (88) est constituée par des tronçons d'un collet radial, et en ce qu'il est prévu des moyens d'immobilisation en rotation et d'indexation en position angulaire de la première pièce (14) par rapport à la seconde pièce (16).

8. Bouchon selon la revendication 7, caractérisé en ce que les moyens d'indexation comportent un doigt d'indexation (56) lié en rotation à la première pièce (14) et qui pénètre dans un logement (91) de profil complémentaire formé dans le noyau de centrage (90) de la seconde pièce (16).

9. Bouchon selon l'une des revendications 7 ou 8, caractérisé en ce que les moyens d'immobilisation en rotation comportent un verrou dont le barillet (50, 52, 56) est lié en rotation à la seconde pièce (16) et est monté dans un corps de verrou (44) lié en rotation à la première pièce (14).

10. Bouchon selon la revendication 9, caractérisé en ce que l'organe de sortie (52, 54) du barillet (50) est fixé axialement à la seconde pièce (16, 90) par emboîtement élastique (92, 54).

11. Bouchon selon la revendication 10 prise en combinaison avec la revendication 5, caractérisé en ce que le noyau central (90) de la seconde pièce (16) comporte au moins un doigt d'accrochage (92) qui est reçu dans une gorge radiale interne (54) formée dans l'organe de sortie (52) du barillet (50) du verrou.

12. Bouchon selon l'une quelconque des revendications 9 à 11, caractérisé en ce que le corps (44) du verrou est constitué par une jupe qui s'étend axialement depuis la face supérieure (46) de la plaque de fermeture (20) de la première pièce (14).

13. Bouchon selon l'une quelconque des revendications précédentes, caractérisé en ce qu'il comporte un couvercle (18) d'habillage.

14. Bouchon selon la revendication 13 prise en combinaison avec l'une quelconque des revendications 2 à 12, caractérisé en ce que le couvercle (18) est fixé sur la plaque de fermeture (20) par emboîtement élastique (30, 80).

## Claims

1. A cap (10) for closing the filling line (28) of the fuel tank of a motor vehicle, of the type comprising a rotating locking mechanism which cooperates with complementary means (98) formed on the end of the line (28) and which comprise at least two stops (88, 47) disposed axially opposite one another and between which is received a portion of a radial collar (98) formed on the end of the line (28) when the cap is in the closed position,
**characterised in that** the body of the cap comprises two parts (14, 16) assembled by elastic engagement and each of which comprises one of the said two axial stops (47, 88).

2. A cap according to Claim 1,
**characterised in that** the first part (14) of the body (12) of the cap comprises a locking plate (20), the lower face (22) of which cooperates in tight manner (104) with a corresponding seat (102) formed on the upper end of the line (28) and the lower face of which comprises a first axial stop (47) protrudingly formed on the said lower face (22), and comprises means (36) catching by elastic axial engagement with complementary means (92) formed on the second part (16) of the body (12) of the cap which is disposed beneath the lower face of the locking plate (20).

3. A cap according to Claim 2,
**characterised in that** the first part (14) comprises an engaging skirt (32) which extends axially from the lower face (22) of the locking plate (20) and the peripheral surface of which comprises a radial groove (36) in which at least one engaging lug (94) formed on the second part (16) is received.

4. A cap according to one of Claims 2 or 3,
**characterised in that** the second part (16) of the body (12) of the cap comprises a base (82), the upper face (86) of which is equipped with said complementary engaging means (94) and on which the second axial stop (88) is protrudingly formed.

5. A cap according to Claim 4 taken in combination with Claim 3,
**characterised in that** the base (82) of the second part (16) has a central centring core (90) which is received inside (33) the engaging skirt (32) of the first part (14).

6. A cap according to one of Claims 4 or 5,
**characterised in that** the complementary engaging means are formed by two diametrally opposite engaging lugs (94) which are received by the radial groove (36) of the engaging skirt (32).

7. A cap according to any one of Claims 4 to 6,
**characterised in that** the second axial stop (88) is formed by sections of a radial collar, **and in that** means are provided for the rotational immobilisation and indexing in an angular position of the first part (14) in relation to the second part (16).

8. A cap according to Claim 7,
**characterised in that** the indexing means comprise an indexing finger (56) rotationally connected to the first part (14) which penetrates into a recess (91) having a complementary profile formed in the centring core (90) of the second part (16).

9. A cap according to one of Claims 7 or 8,
**characterised in that** the rotational immobilisation means comprise a lock, the barrel (50, 52, 56) of which is rotationally connected to the second part (16) and is mounted in a lock body (44) rotationally connected to the first part (14).

10. A cap according to Claim 9,
**characterised in that** the component (52, 54) emerging from the barrel (50) is fixed axially to the second part (16, 19) by elastic engagement (92, 54).

11. A cap according to Claim 10 taken in combination with Claim 5,
**characterised in that** the central core (90) of the second part (16) comprises at least one engaging finger (92) which is received in an inner radial groove (64) formed in the component (52) emerging from the barrel (50) of the lock.

12. A cap according to any one of Claims 9 to 11,
**characterised in that** the body (44) of the lock is formed by a skirt extending axially from the upper face (46) of the locking plate (20) of the first part (14).

13. A cap according to any one of the preceding Claims,
**characterised in that** it comprises a covering lid (18).

14. A cap according to Claim 13 taken in combination with any one of Claims 2 to 12,
**characterised in that** the lid (18) is fixed onto the locking plate (20) by elastic engagement (30, 80).

## Patentansprüche

1. Tankverschluß (10) für ein Kraftstoffeinfüllrohr (28) eines Fahrzeugs, in der Ausführung mit einem Drehverriegelungsmechanismus, der mit formschlüssigen Mitteln (98) zusammenwirkt, die am freien Ende des Kraftstoffeinfüllrohrs (28) ausgebildet sind und die mindenstens zwei Anschläge (88, 47) umfassen, die axial einander gegenüberliegend angeordnet sind und zwischen denen ein Teilstück eines am Ende des Kraftstoffeinfüllrohrs (28) ausgebildeten radialen Bunds (98) eingesetzt ist, wenn sich der Tankverschluß in Schließposition befindet, **dadurch gekennzeichnet,** daß der Verschlußkörper zwei Bestandteile (14, 16) umfaßt, die durch elastische Einpassung zusammengebaut sind und die jeweils einen der besagten zwei axialen Anschläge (47, 88) umfassen.

2. Tankverschluß nach Anspruch 1, **dadurch gekennzeichnet,** daß der erste Bestandteil (14) des Verschlußkörpers eine Verschlußplatte (20) umfaßt, deren Unterseite (22) dicht (104) mit einem entsprechenden Sitz (102) zusammenwirkt, der am oberen Ende des Kraftstoffeinfüllrohrs (28) ausgebildet ist, und deren Unterseite einen ersten axialen Anschlag (47) umfaßt, der vorspringend an der besagten Unterseite (22) ausgebildet ist, und Rastmittel (36) für die axiale elastische Einpassung mit formschlüssigen Mitteln (92) umfaßt, die am zweiten Bestandteil (16) des Verschlußkörpers (12) ausgebildet sind, der unter der Unterseite (22) der Verschlußplatte (20) angeordnet ist.

3. Tankverschluß nach Anspruch 2, **dadurch gekennzeichnet,** daß der erste Bestandteil (14) eine Rasteinfassung (32) umfaßt, die sich axial von der Unterseite (22) der Verschlußplatte (20) aus erstreckt und deren Umfangsfläche eine radiale Auskehlung (36) enthält, in die mindestens eine am zweiten Bestandteil (16) ausgebildete Rastnase (94) eingreift.

4. Tankverschluß nach einem der Ansprüche 2 oder 3, **dadurch gekennzeichnet,** daß der zweite Bestandteil (16) des Verschlußkörpers (12) einen Boden (82) umfaßt, dessen Oberseite (86) mit den besagten formschlüssigen Rastmitteln (94) versehen ist und an dem der zweite axiale Anschlag (88) vorspringend ausgebildet ist.

5. Tankverschluß nach Anspruch 4 in Kombination mit Anspruch 3 , **dadurch gekennzeichnet**, daß der Boden (82) des zweiten Bestandteils (16) einen mittigen Zentrierkern (90) umfaßt, der in das Innere (33) der Rasteinfassung (32) des ersten Bestandteils (14) eingreift.

6. Tankverschluß nach einem der Ansprüche 4 oder 5, **dadurch gekennzeichnet,** daß die formschlüssigen Rastmittel aus zwei diametral gegenüberliegenden Rastnasen (94) bestehen, die in die radiale Auskehlung (36) der Rasteinfassung (32) eingreifen.

7. Tankverschluß nach einem der Ansprüche 4 bis 6, **dadurch gekennzeichnet,** daß der zweite axiale Anschlag (88) aus Teilstücken eines radialen Bunds besteht und daß Mittel zur Drehsicherung und Winkelpositionierung des ersten Bestandteils (14) im Verhältnis zum zweiten Bestandteil (16) vorgesehen sind.

8. Tankverschluß nach Anspruch 7, **dadurch gekennzeichnet,** daß die Positioniermittel einen Positionierfinger (56) umfassen, der drehfest mit dem ersten Bestandteil (14) verbunden ist und der in eine Aufnahme (91) mit formschlüssigem Profil eindringt, die im Zentrierkern (90) des zweiten Bestandteils (16) ausgebildet ist.

9. Tankverschluß nach einem der Ansprüche 7 oder 8, **dadurch gekennzeichnet,** daß die Drehsicherungsmittel ein Zylinderschloß umfassen, dessen Schloßzylinder (50, 52, 56) drehfest mit dem zweiten Bestandteil (16) verbunden und in einen drehfest mit dem ersten Bestandteil (14) verbundenen Schloßkörper (44) eingebaut ist.

10. Tankverschluß nach Anspruch 9, **dadurch gekennzeichnet,** daß das Ausgangsorgan (52, 54) des Schloßzylinders (50) durch elastische Einpassung (92, 54) axial am zweiten Bestandteil (16, 90) befestigt ist.

11. Tankverschluß nach Anspruch 10 in Kombination mit Anspruch 5 , **dadurch gekennzeichnet,** daß der mittige Kern (90) des zweiten Bestandteils (16) mindestens einen Rastfinger (92) umfaßt, der in eine innere radiale Auskehlung (54) eingreift, die im Ausgangsorgan (52) des Schloßzylinders (50) ausgebildet ist.

12. Tankverschluß nach einem der Ansprüche 9 bis 11, **dadurch gekennzeichnet,** daß der Schloßkörper (44) aus einer Einfassung besteht, die sich axial von der Oberseite (46) der Verschlußplatte (20) des ersten Bestandteils (14) aus erstreckt.

13. Tankverschluß nach einem der vorangehenden Ansprüche, **dadurch gekennzeichnet,** daß er einen Verkleidungsdeckel (18) umfaßt.

14. Tankverschluß nach Anspruch 13 in Kombination mit einem der Ansprüche 2 bis 12 , **dadurch gekennzeichnet,** daß der Deckel (18) durch elastische Einpassung (30, 80) an der Verschlußplatte (20) befestigt ist.
